# EUROPEAN PATENT APPLICATION

(11) **EP 3 147 731 A1**
(43) Date of publication of application: **29.03.2017**
(21) Application number: 15191044.5
(22) Date of filing: 22.10.2015
(51) Int. Cl.: G05B 19/042

(54) **INTERLOCK SYSTEM**

(30) Priority: 28.09.2015 US 201514867261
(71) Applicant: Agilent Technologies, Inc., Santa Clara, CA 95051 (US)
(72) Inventor: Hagen, Andreas, Quathiaski Cove, British Columbia V0P1N0 (CA); Gollapalli, Sriram, Waban, MA 02468 (US); Govind, Rishab, Framingham, MA 01701 (US); Morgan, Joshua, Oak Ridge, NJ 07438 (US); Koparov, Dimitar, Columbia, SC 29205 (US); Di Bernardo, Vincenzo, London, Greater London W4 2PT (GB)
(74) Representative: Grünecker Patent- und Rechtsanwälte PartG mbB

(57) **Abstract**

An implementation of an interlock system (100) disclosed herein provides an interlock system for remotely tracking and controlling usage of a number of equipment (140-144). The interlock system disclosed herein includes an interlock module (130-138) communicatively connected to the equipment (140-144) and is configured to control the status and monitor usage of such equipment. The interlock system (100) further includes a web-based platform (102) including a rule-based engine (108) controlling usage of the equipment based in part on the status and usage of the equipment.

## Description

### FIELD

Implementations disclosed herein relate, in general, to the information management technology and specifically to technology for remotely controlling equipment.

### SUMMARY

An implementation of an interlock system disclosed herein provides an interlock system for remotely tracking and controlling usage of a number of equipment. The interlock system disclosed herein includes an interlock module communicatively connected to the equipment and is configured to control the status and monitor usage of such equipment. The interlock system further includes a web-based platform including a rule-based engine controlling usage of the equipment based in part on the status and usage of the equipment.

The web-based platform provides a user interface to a user to provide an input regarding use of the equipment and determines, based on the status of the equipment, the user input, and one or more rules of the rule-based engine an equipment control signal. The equipment control signal is communicated to the interlock module via a bridge located on an internal communications network, wherein the bridge is configured to receive the equipment control signal from the web-based platform to control the status of the equipment, generate and communicate a message to the interlock module, receive a response from the interlock module regarding the status of the equipment, and to communicate the status of the equipment to the web-based platform.

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter. Other features, details, utilities, and advantages of the claimed subject matter will be apparent from the following more particular written Detailed Description of various embodiments and implementations as further illustrated in the accompanying drawings and defined in the appended claims.

### BRIEF DESCRIPTION OF THE DRAWINGS

A further understanding of the nature and advantages of the present technology may be realized by reference to the figures, which are described in the remaining portion of the specification. In the figures, like reference numerals are used throughout several figures to refer to similar components. In some instances, a reference numeral may have an associated sub-label consisting of a lower-case letter to denote one of multiple similar components. When reference is made to a reference numeral without specification of a sub-label, the reference is intended to refer to all such multiple similar components.
FIG. 1 illustrates an example network diagram representing functioning of an interlock system disclosed herein.
FIG. 2 illustrates an alternative example network diagram representing functioning of the interlock system disclosed herein.
FIG. 3 illustrates yet alternative example network diagram representing functioning of the interlock system disclosed herein.
FIG. 4 illustrates yet alternative example network diagram representing functioning of the interlock system disclosed herein.
FIG. 5 illustrates a flowchart of example operations of the interlock system disclosed herein.
FIG. 6 illustrates an alternative flowchart of example operations of the interlock system disclosed herein.
FIG. 7 illustrates an example computing system that can be used to implement the interlock system disclosed herein.

### DETAILED DESCRIPTION

Modem day laboratories include a large number of complex microscopes, scales, centrifuges, balances, heating and cooling equipment, etc. Such equipment is generally expensive, critical, and prone to damage. Therefore, the usage of such equipment is restricted to users with proper authorization and training. An interlock system disclosed herein allows remote monitoring of laboratory equipment, tracking the usage of laboratory equipment, and allowing access to the laboratory equipment to users based on one or more criteria. For example, the interlock system may use a rule-based engine that allows multiple users to access laboratory equipment using a web-based platform.

In one implementation, a user can access the equipment using a web-based interface. An example of such web-based interface provides a graphical user interface (GUI) for a user to enter one or more inputs such as the requested equipment, the desired time of usage, user profile information, etc. For example, users may create a user account attached to their user profile, wherein the user profile provides information about the user's training, affiliation, payment information, etc. The web-based interface may be managed by a web-server that collects data from the web-based interface and provides data to the web-based interface. In one implementation, the web-server may include a rule-based engine that includes a number of rules for managing the access to and use of the laboratory equipment. For example, an example rule may provide the training level required of the user before that user is give access to particular laboratory equipment.

The organization and the functioning of such an interlock system is described in detail using the following figures. Namely, the figures below, taken together or separately, describe various implementations or components of the interlock system.

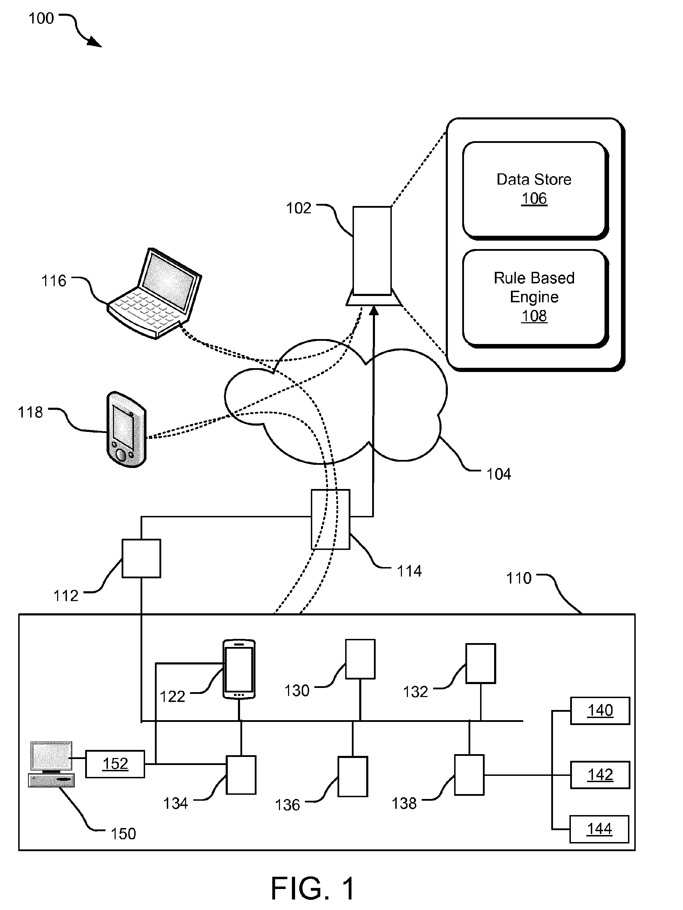

FIG. 1 illustrates an example network diagram representing functioning of an interlock system 100 disclosed herein. The interlock system 100 includes an interlock server 102 that is communicatively connected to a network 104, such as the Internet. Note that while the interlock server 102 is illustrated to be a single server, in an alternative implementation, multiple servers may serve as the interlock server 102. Yet alternatively, the capabilities of the interlock server 102 may be implemented using cloud implementation, such as amazon web service, Microsoft OneDrive, etc. The interlock server 102 may include multiple modules, including a data store 106, a rule based engine 108, etc. Note that in an alternative implementation, one or more of these module 106, 108, etc., may be implemented on other servers connected to the network 104 or on a cloud computing system.

The interlock system 100 also includes an interlock subnet 110 that is communicatively connected to the interlock server 102 via a secure communications protocol, such as the secure shell (SSH) protocol. The interlock subnet 110 may be located on an internal network 112 of an organization, also referred to as a campus network. The internal network 112 may be secured from the network 104 via a firewall 114. In an implementation of the interlock subnet 110, the communication protocol used to connect the interlock subnet 110 to the interlock server 102 is such that any devices or users on the network 104 other than the interlock server 102 cannot access the interlock subnet 110.

The interlock server 102 may provide GUI interface via a website, a mobile application, etc., to users such that users using devices 116, 118 may be able to access functionalities of the interlock system 100. However, given the security protocols of the firewall 114 and the communication protocol between the interlock server 102 and the interlock subnet 110, the users may be required to go through the interlock server 102 for accessing the interlock subnet 110.

The interlock subnet 110 includes an interlock bridge 122 that securely connects multiple interlock devices 130-138 to the interlock server 102. Each of the interlock devices 130-138 may have a dedicated identifier, such as an Internet Protocol (IP) address, a media access control (MAC) address, a unique name of the device, etc., that may be used to access to and communicate with the interlock devices 130-138. Each of the interlock devices 130-138 may be connected to one or more laboratory equipment. For example, in FIG. 1, the interlock device 138 is connected to laboratory equipment 140-144. Such equipment may be, for example, microscopes, scales, centrifuges, balances, heating and cooling equipment, etc. In an alternative implementation, the laboratory equipment 140-144 may also have one or more software or firmware based applications installed on such equipment. In such a case, the interlock device 138 may be communicating with and controlling such an application on the laboratory equipment 140-144. Yet alternatively, the laboratory equipment 140-144 may be merely a computing device that is running an application and in such an implementation, the interlock device 138 may be communicating with and controlling such application. Furthermore, note that while in the illustrated implementation, the interlock devices 130-138 communicate with the interlock server 102 via the bridge 122, in an alternative implementation the interlock devices 130-138 may communicate directly with the interlock server 102. Specifically, in such an implementation, the interlock server 102 may be able to address the interlock devices 130-138 directly without addressing the interlock devices 130-138 using the bridge 122 using their dedicated identifiers.

The interlock devices 130-138 may be connected to such laboratory equipment 140-144 using electrically isolating connectors, such as optical switch, optical valve, solenoid, etc. The interlock devices 130-138 may be able to monitor the status, such as an on/off status, of the laboratory equipment 140-144 and report such status to the interlock server 102 via the interlock bridge 122. In one implementation, the interlock devices 130-138 may report the status of the laboratory equipment 140-144 automatically on a periodic basis, such as every few minutes. In alternative implementation, the interlock devices 130-138 may report the status of the laboratory equipment 140-144 in response to status request from the interlock server 102.

The interlock system 100 allows users to interact with the laboratory equipment 140-144 via the interlock devices 130-138. The interlock devices 130-138 may include a microcontroller that can be electrically or otherwise attached to the laboratory equipment 140-144 giving the interlock devices 130-138 core monitoring capabilities and actual control over which user can access the laboratory equipment 140-144 based on one or more booking rules. The interlock server 102 provides control capabilities to a facilitator, or a resource caretaker, to the laboratory equipment 140-144.

The data store 106 may be used to store various information about the interlock system 100 including information about the laboratory equipment 140-144, the interlock devices 130-138, etc. Example information about the laboratory equipment 140-144 may include the hourly rate for usage of the laboratory equipment 140-144, the training level of a user necessary before they are allowed to use such laboratory equipment 140-144, number of users that can simultaneously use one of such laboratory equipment 140-144, etc. The data store 106 may also store information about the users, such as their profile information, including the user names, user experience levels, their affiliation, payment information, etc.

Furthermore, the data store 106 may also be used to store usage records of the laboratory equipment 140-144. For example, each of such usage records may specify an instance of usage of one of the laboratory equipment 140-144 such as the usage start time, usage end time, outputs from the use, the identity of the user, the schedules for usage of the laboratory equipment 140-144, etc. Such usage data can be used to generate various reports for the laboratory equipment 140-144, such as billing reports, usage reports, etc.

The rule-based engine 108 can be used to store and implement various rules for providing and controlling access to the laboratory equipment 140-144. An example rule may specify the usage hours for a particular of the laboratory equipment 140-144. The interlock server 102 may also provide a web-based user interface (not shown) that can be used by a facility to determine such rules. For example, a facility manager may specify the hours of day and days of week that a particular of the laboratory equipment 140-144 may be used. Similarly, the facility manager may also specify the booking rules (time of day, time of week, is another individual signed up at that time, priority levels for users, etc.) for the laboratory equipment 140-144, user types (internal of external, trained or untrained, etc.), reservation types (pre-reservation requirements or if walk-up appointments are acceptable, etc.), billing rates for the usage for different types of users, etc. The facility manager can also use such web-based user interface to lock out various users from using one or more of the laboratory equipment 140-144.

In one implementation, the interlock system 100 may also include a kiosk style computer interface 150 internal to the interlock subnet 110. For example, such kiosk 150 may be communicatively connected to the interlock bridge 122 or to one or more of the interlock devices 134 via a software interlock interface 152. One or more of the functions available to a user or the facility manager via the interlock server 102 may also be available through the kiosk 150 and the software interlock interface 152.

The interlock system 100 provides a number of benefits to laboratory equipment facilitators by allowing them to manage access to the equipment, view equipment usage in real time, maximize equipment usage by ensuring that scheduled times and calendars are honored and by allowing walk-up usage when time is available. To a customer, the interlock system 100 provides online log in facility, availability information based on the calendar, review of scheduled sessions, actual logs of past usage, etc. By using the interlock devices 130-138, the interlock system 100 provides decoupling of tracking system from the local operating system, real time tracking of usage, allowing usage of laboratory equipment 140-144 even if they are not communicatively connected to the Internet, etc.

In one implementation of the interlock system 100, the interlock devices 130-138 may control a number of, say 2, 10, 16, etc., regular 110V outlets (not shown). Specifically, the interlock devices 130-138 can turn on, turn off, check the status, etc., of each of such number of outlets. In an alternative implementation, the interlock devices 130-138 may be more industrial grade devices where each of the interlock devices 130-138 controls DC current up to 30V. This gives added flexibility for controlling more sensitive equipment and engaging interlocks on the equipment without shutting off the main power supply. Thus, while the implementations of the interlock system 100 disclosed herein are used for managing and controlling access to the laboratory equipment 140-144, such interlock system can also be used to manage and control access to other industrial equipment, manufacturing equipment, etc.

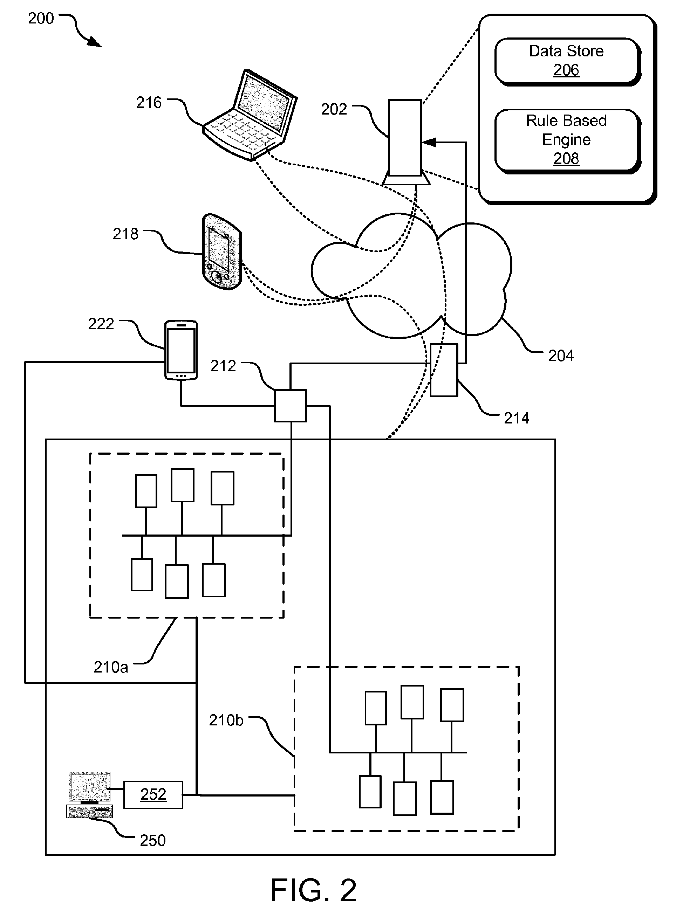

FIG. 2 illustrates an alternative example network diagram representing functioning of an interlock system 200 disclosed herein. The configuration of the interlock system 200 is somewhat similar to that of the interlock system 100 disclosed in FIG. 1. Therefore, one or more components of the interlock system 200 similar to that in the interlock system 100 of FIG. 1 are not discussed in detail herein. However, the interlock system 200 illustrates a large-scale deployment with multiple subnets being connected and controlled using a single interlock server 202.

Specifically, the interlock server 202 is connected to a network 204, such as the Internet, and includes a data store 206 and a rule-based engine 208 and controls access to various interlock subnets 210a, 210b, etc. The interlock server 202 may be connected to various interlock subnets 210a, 210b located on a campus network 212. The access to the interlock subnets 210a, 210b is managed and controlled by an interlock bridge 222 connected to the campus network 212. Furthermore, the campus network 212 is protected by a firewall 214.

One or more user devices 216, 218 can access a web portal of other web-based interface to request and gain access to various laboratory equipment (not shown) connected to the interlock devices (not enumerated) of the interlock subnets 210a, 210b, etc. The interlock system 200 may also include a kiosk style computer interface 250 that communicates with the interlock subnets 210a, 210b via a software interlock module 252.

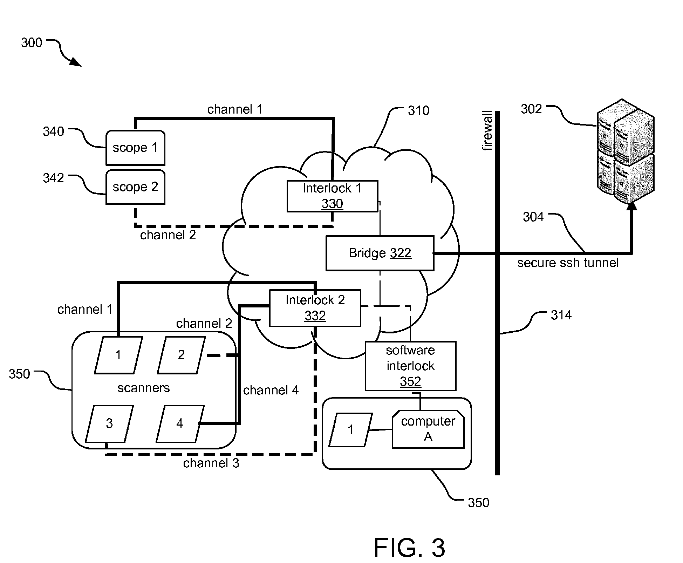

FIG. 3 illustrates yet alternative example network diagram representing functioning of an interlock system 300 disclosed herein. The interlock system 300 includes an interlock server 302 connected to an interlock bridge 322 via a secure SSH tunnel 304. The interlock bridge 322 may be located on an internal network 310 that is configured behind a firewall 314. The interlock bridge 322 may communicate with interlock devices 330, 332 using an identifier for the interlock devices. Such an identifier for the interlock devices 330, 332 may be, for example, an IP address, a MAC address, etc.

Each of the interlock devices 330, 332 may connect via a communication channel to a plurality of equipment. For example, FIG. 3 illustrates that the interlock device 330 is communicatively connected with a first microscope 340 via the communication channel 1 and with a second microscope 342 via the communication channel 2. Similarly, a number of scanners 350 are connected to an interlock device 332 via three different communications channels of the interlock device 32.

The interlock device 330 may turn the microscopes 340, 342 on or off and/or be able to check the on/off status of the microscopes 340, 342. Note that while FIG. 3 illustrates each of the channels to have only a couple of equipment, in alternative implementation, a large number of equipment, such as up to 16 equipment or higher may be connected on each channel. Each of the microscopes 340, 342 may be associated with a specific channel on the network attached to the interlock devices 330, 332, etc. Attaching one or more of the microscopes 340, 342 to the network may include setting an identifier such as a dedicated IP address of the interlock device 330, 332 and the specific channel or outlet that will control the equipment. Such specific channel or outlet may be a numerical value between *1-n* where. *n* is the number of outlets on the selected interlock devices 330, 332.

The interlock devices 330, 332 may be connected to the equipment, such as the microscopes 340, 342 using non-electrical connections, such as optical relays, optical switches, optical valves, etc. Such non-electrical connections lie between the interlock devices 330, 332 and the equipment such as the microscopes 340, 342, thus electrically isolating the equipment from the interlock devices to prevent interference. In one implementation, such non-electrical connections are configured on the equipment end. The interlock devices 330, 332 may also be used to periodically monitor status of the microscopes 340, 342 and communicate such status to the interlock server 302. The implementation of the interlock system 300 also includes a kiosk 350 that may be implemented on a computer and communicatively connected to the interlock bridge 322 via a software interlock 352.

The interlock server 302 may include a data-store (not shown) to store various information about the interlock system 300 including user information, equipment information, etc. The interlock server 302 may also include a rule-based engine (not shown) to control and allow access to the microscopes 340, 342, etc., via the interlock bridge 322. For example, a web-based interface provided by the interlock server 302 may allow facilitators to define and amend one or more rules. For example, a user may log into the web-based interface and activate a pre-scheduled session for use of an equipment, track actual start and end time of such session, release remaining time of a pre-scheduled session for other users, etc. Such web-based interface may also allow users to request or schedule access to the microscopes 340, 342. The interlock server 302 may also generate various reports for the users and the facilitators.

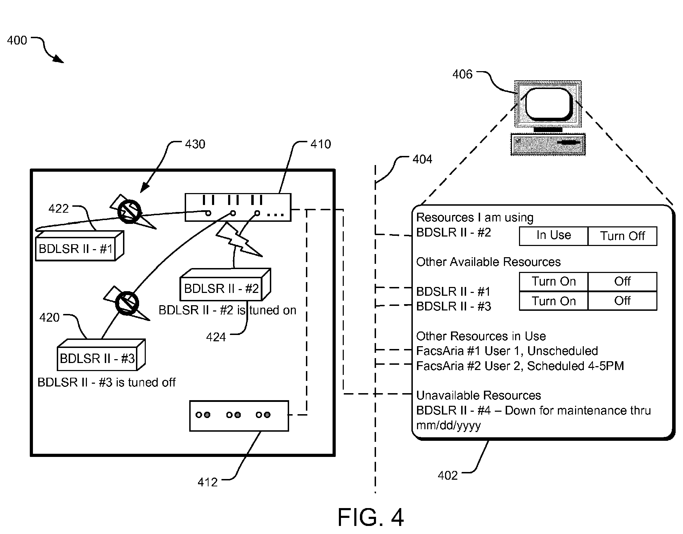

FIG. 4 illustrates yet alternative example network diagram representing functioning of an interlock system 400 disclosed herein. Specifically, FIG. 4 illustrates various interlock devices 410, 412 located on an internal network that are connected to a kiosk or an interlock server 406 via a virtual private network (VPN) 404. FIG 4 also includes a view 402 of a user interface on the kiosk 406 or a web-based interface that can be used by a user to view the status of one or more equipment, schedule use of such equipment, request change to the status of the equipment, etc. The view 402 illustrates that a user can use the user interface to log in and then turn on and/or off available equipment. The view 402 can be used to clearly communicate to the user information about any equipment on which the user has scheduled time, equipment status, equipment being used by other users, down-status for an equipment, etc. As shown by 430, the interlock device 410 is electrically isolated from the equipment 420, 422. In other words, the interlock device 410 may communicate with the equipment 420, 422 using other communication methods such as optical communication via an optical valve, etc.

The interlock devices 410 and 412 may be network attached power controller or relay. While the implementation discloses only two such interlock devices, a core facility may add as many of such interlock devices as necessary. In one implementation, the power controllers may be configured to control between two and twenty equipment, such as microscopes, etc., from one dedicated IP address. The VPN 404 may access the interlock devices 410 and 412 using their identifiers, such as their IP addresses. Each of the interlock devices 410 and 412 may be connected to equipment, such as the equipment 420 (off), 422, 424 (on), etc.

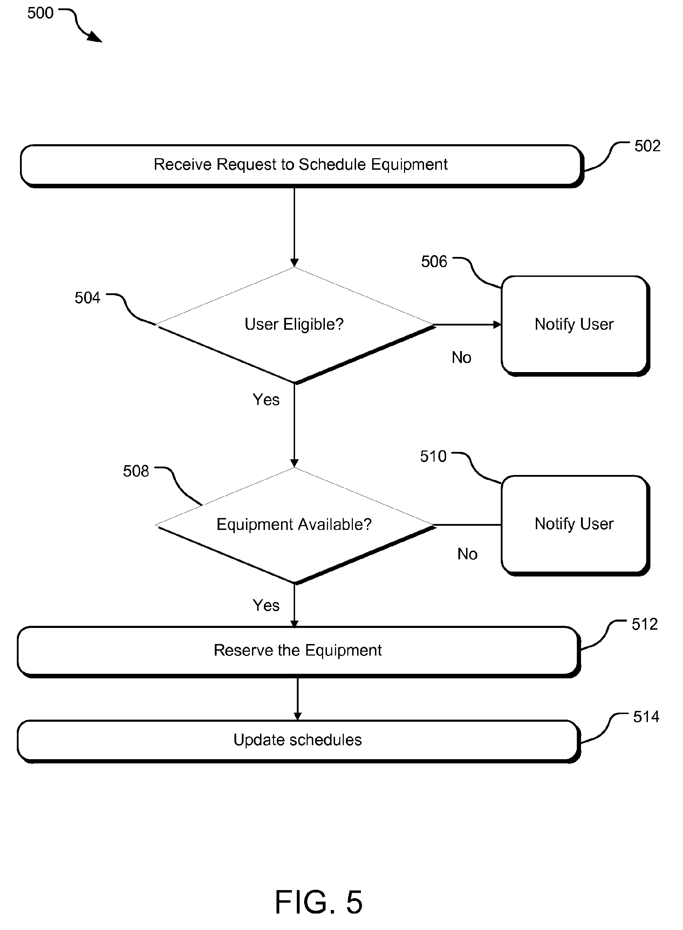

FIG. 5 illustrates a flowchart of example operations 500 of the interlock system disclosed herein. Specifically, the operations 500 are directed to allowing a user to schedule a usage of equipment controlled by the interlock system. An operation 502 receives a request from a user requesting use of a particular equipment. For example, a user may request a use of a microscope for a period of an hour at a future date. An operation 504 evaluate the user's credentials, such as the user's training, etc., to determine if the user is allowed to use the requested microscope. In an alternative implementation, such evaluating of the user's credentials may be done *a priori* when a user is registered in the interlock system. The evaluation of the user's request may be performed based on a number of rules of a rule-based engine. If the user is not allowed to use the microscope, an operation 506 sends a message to the user notifying so.

If the user is allowed the use, an operation 508 determines if the equipment is available at the requested time. For example, a data store of the interlock system may have records storing the usage calendar for the requested equipment and the operation 508 may access such records in determining whether the equipment is available or not. If the equipment is not available at the requested time, an operation 510 notifies the user. Additionally, the operation 510 may also provide the user with a schedule of other time slots that are available for the requested equipment. However, in an alternative implementation, a calendar indicating the available time slots may be simply provided upon request by the user.

If the requested equipment is available at the time of the request, an operation 512 reserves the equipment. For example, the data store record of the requested equipment may be altered to indicate such reservation. An operation 514 updates the schedule of available equipment.

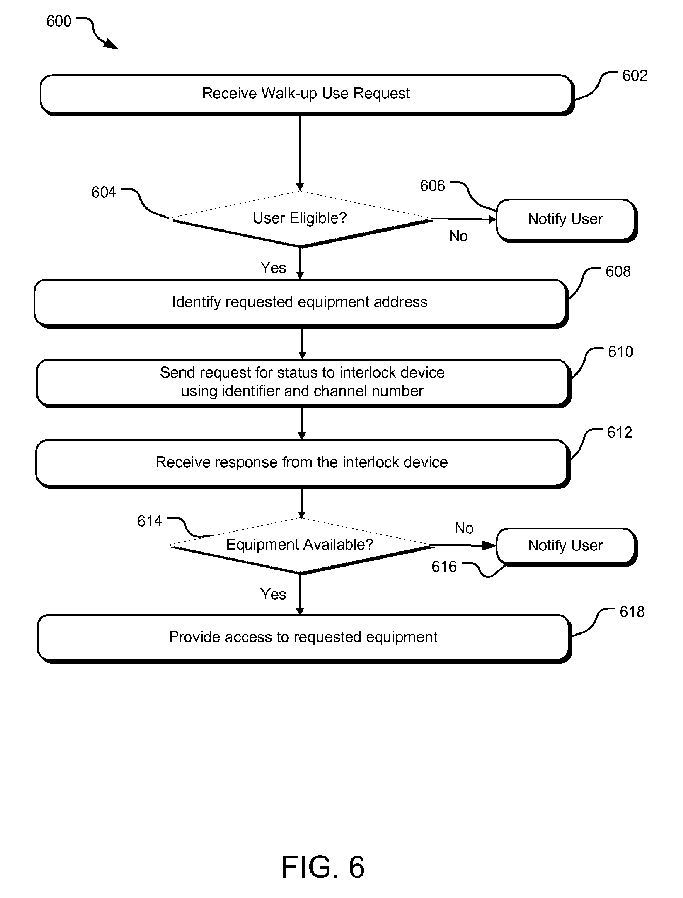

FIG. 6 illustrates an alternative flowchart of example operations 600 of the interlock system disclosed herein. Specifically, the operations 600 illustrate allowing a user to use a kiosk style interface to request use of equipment on a walk-up basis. The kiosk style interface may be implemented internal to a campus network and control to such interface may be controlled by key-card. An operation 602 receives a request at the kiosk style interface for access to equipment. The user may have to log into the interlock system and identify herself by providing one or more user identifying information.

An operation 604 determines whether the user is eligible to both use the interlock system on a walk-up basis and whether the user has credentials, such as training, etc., to use the requested equipment. For example, if the user requests to use a microscope A, the operation 604 may compare the user experience level with the experience required to use microscope A. If all user eligibility criteria are not met, an operation 606 notifies the user with the appropriate reasons as to why the user is not allowed to use the requested equipment, such as the microscope A. If the user is identified as an eligible user, an operation 608 determines the network address of the requested equipment. For example, the operation 608 sends a query to a data store of the interlock system to determine what interlock device and what channel on that interlock device is associated with the requested equipment. For example, the requested microscope A may be associated with an interlock device identified by identifier *X* and on channel *n* of such interlock device. For example, the identifier of the interlock device may be an IP address of the interlock device, a MAC address of the interlock device, of other identifier that uniquely identifies the interlock device on the interlock network.

Subsequently an operation 610 sends a request for status of the requested equipment. For example, if a particular microscope A requested by the user is identified to be at interlock device X on channel n, an IP request (or other form of request as necessary) may be send to the interlock device X to check the status of a device on its channel n. The operation 610 may also send a request to a data store of the interlock device to see if there is any scheduled use of the requested equipment at current time or if the data store already has a current use status therein. The interlock device associated with such requested equipment may send an appropriate signal on an optical relay, solenoid, etc., to the requested equipment to see the current status. The status of the requested equipment may be an on/off status, the maintenance status, etc.

An operation 612 receives the status information from the interlock device. An operation 614 analyzes the status information to determine if the device is available. For example, if the equipment is currently in use or is in maintenance stage, an operation 616 informs the user of the unavailability of the requested device for walk-up use and the reasons thereof. If the requested equipment is available, an operation 618 grants the walk-up user access to the equipment. In one implementation, once a user is granted an access to the requested equipment, the user may be able to control the use of the equipment and receive results from the equipment as well. For example, if the requested equipment is a microscope, once a user has access to it via the kiosk style interface, the user may be able to control one or more parameter of the operation of the microscope and receive data from the microscope via the interlock device.

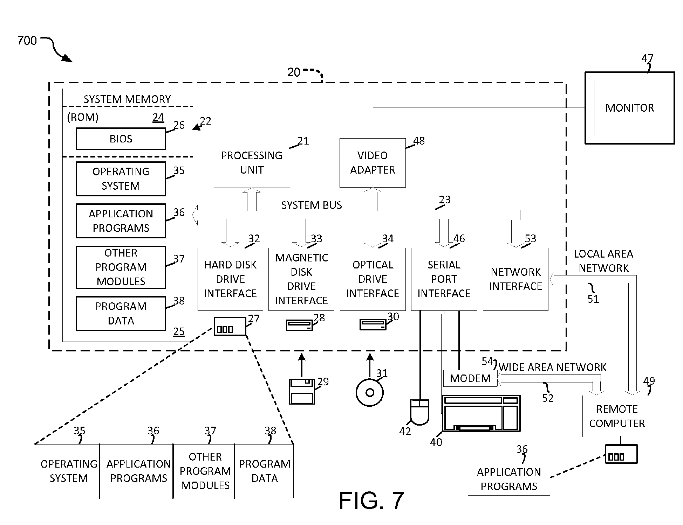

FIG. 7 illustrates an example system that may be useful in implementing the described technology. The example hardware and operating environment of FIG. 7 for implementing the described technology includes a computing device, such as general purpose computing device in the form of a gaming console or computer 20, a mobile telephone, a personal data assistant (PDA), a set top box, or other type of computing device. In the implementation of FIG. 7, for example, the computer 20 includes a processing unit 21, a system memory 22, and a system bus 23 that operatively couples various system components including the system memory to the processing unit 21. There may be only one or there may be more than one processing unit 21, such that the processor of computer 20 comprises a single central-processing unit (CPU), or a plurality of processing units, commonly referred to as a parallel processing environment. The computer 20 may be a conventional computer, a distributed computer, or any other type of computer; the implementations are not so limited.

The system bus 23 may be any of several types of bus structures including a memory bus or memory controller, a peripheral bus, a switched fabric, point-to-point connections, and a local bus using any of a variety of bus architectures. The system memory may also be referred to as simply the memory, and includes read only memory (ROM) 24 and random access memory (RAM) 25. A basic input/output system (BIOS) 26, containing the basic routines that help to transfer information between elements within the computer 20, such as during start-up, is stored in ROM 24. The computer 20 further includes a hard disk drive 27 for reading from and writing to a hard disk, not shown, a magnetic disk drive 28 for reading from or writing to a removable magnetic disk 29, and an optical disk drive 30 for reading from or writing to a removable optical disk 31 such as a CD ROM, DVD, or other optical media.

The hard disk drive 27, magnetic disk drive 28, and optical disk drive 30 are connected to the system bus 23 by a hard disk drive interface 32, a magnetic disk drive interface 33, and an optical disk drive interface 34, respectively. The drives and their associated tangible computer-readable media provide nonvolatile storage of computer-readable instructions, data structures, program modules and other data for the computer 20. It should be appreciated by those skilled in the art that any type of tangible computer-readable media which can store data that is accessible by a computer, such as magnetic cassettes, flash memory cards, digital video disks, random access memories (RAMs), read only memories (ROMs), and the like, may be used in the example operating environment.

A number of program modules may be stored on the hard disk, magnetic disk 29, optical disk 31, ROM 24, or RAM 25, including an operating system 35, one or more application programs 36, other program modules 37, and program data 38. A user may enter commands and information into the personal computer 20 through input devices such as a keyboard 40 and pointing device 42. Other input devices (not shown) may include a microphone (e.g., for voice input), a camera (e.g., for a natural user interface (NUI)), a joystick, a game pad, a satellite dish, a scanner, or the like. These and other input devices are often connected to the processing unit 21 through a serial port interface 46 that is coupled to the system bus, but may be connected by other interfaces, such as a parallel port, game port, or a universal serial bus (USB). A monitor 47 or other type of display device is also connected to the system bus 23 via an interface, such as a video adapter 48. In addition to the monitor, computers typically include other peripheral output devices (not shown), such as speakers and printers.

The computer 20 may operate in a networked environment using logical connections to one or more remote computers, such as remote computer 49. These logical connections are achieved by a communication device coupled to or a part of the computer 20; the implementations are not limited to a particular type of communications device. The remote computer 49 may be another computer, a server, a router, a network PC, a client, a peer device or other common network node, and typically includes many or all of the elements described above relative to the computer 20, although only a memory storage device 50 has been illustrated in FIG. 7. The logical connections depicted in FIG. 7 include a local-area network (LAN) 51 and a wide-area network (WAN) 52. Such networking environments are commonplace in office networks, enterprise-wide computer networks, intranets and the Internet, which are all types of networks.

When used in a LAN-networking environment, the computer 20 is connected to the local network 51 through a network interface or adapter 53, which is one type of communications device. When used in a WAN-networking environment, the computer 20 typically includes a modem 54, a network adapter, a type of communications device, or any other type of communications device for establishing communications over the wide area network 52. The modem 54, which may be internal or external, is connected to the system bus 23 via the serial port interface 46. In a networked environment, program engines depicted relative to the personal computer 20, or portions thereof, may be stored in the remote memory storage device. It is appreciated that the network connections shown are example and other means of and communications devices for establishing a communications link between the computers may be used.

In an example implementation, software or firmware instructions and data for providing a search management system, various applications, a search context pipelines, search services, a local file index, a local or remote application content index, a provider API, a contextual application launcher, and other instructions and data may be stored in memory 22 and/or storage devices 29 or 31 and processed by the processing unit 21.

Some embodiments may comprise an article of manufacture. An article of manufacture may comprise a tangible storage medium to store logic. Examples of a storage medium may include one or more types of computer-readable storage media capable of storing electronic data, including volatile memory or non-volatile memory, removable or non-removable memory, erasable or non-erasable memory, writeable or re-writeable memory, and so forth. Examples of the logic may include various software elements, such as software components, programs, applications, computer programs, application programs, system programs, machine programs, operating system software, middleware, firmware, software modules, routines, subroutines, functions, methods, procedures, software interfaces, application program interfaces (API), instruction sets, computing code, computer code, code segments, computer code segments, words, values, symbols, or any combination thereof. In one embodiment, for example, an article of manufacture may store executable computer program instructions that, when executed by a computer, cause the computer to perform methods and/or operations in accordance with the described embodiments. The executable computer program instructions may include any suitable type of code, such as source code, compiled code, interpreted code, executable code, static code, dynamic code, and the like. The executable computer program instructions may be implemented according to a predefined computer language, manner or syntax, for instructing a computer to perform a certain function. The instructions may be implemented using any suitable high-level, low-level, object-oriented, visual, compiled and/or interpreted programming language.

The implementations described herein are implemented as logical steps in one or more computer systems. The logical operations may be implemented (1) as a sequence of processor-implemented steps executing in one or more computer systems and (2) as interconnected machine or circuit modules within one or more computer systems. The implementation is a matter of choice, dependent on the performance requirements of the computer system being utilized. Accordingly, the logical operations making up the implementations described herein are referred to variously as operations, steps, objects, or modules. Furthermore, it should be understood that logical operations may be performed in any order, unless explicitly claimed otherwise or a specific order is inherently necessitated by the claim language.

Embodiments of the present technology are disclosed herein in the context of an interlock system. In the above description, for the purposes of explanation, numerous specific details are set forth in order to provide a thorough understanding of the present invention. It will be apparent, however, to one skilled in the art that the present invention may be practiced without some of these specific details. For example, while various features are ascribed to particular embodiments, it should be appreciated that the features described with respect to one embodiment may be incorporated with other embodiments as well. By the same token, however, no single feature or features of any described embodiment should be considered essential to the invention, as other embodiments of the invention may omit such features.

In the interest of clarity, not all of the routine functions of the implementations described herein are shown and described. It will, of course, be appreciated that in the development of any such actual implementation, numerous implementation-specific decisions must be made in order to achieve the developer's specific goals, such as compliance with application - and business- related constraints, and that those specific goals will vary from one implementation to another and from one developer to another.

In the context of the present invention, the term "processor" describes a physical computer (either stand-alone or distributed) or a virtual machine (either stand-alone or distributed) that processes or transforms data. The processor may be implemented in hardware, software, firmware, or a combination thereof.

The above specification, examples and data provide a complete description of the structure and use of exemplary embodiments of the invention. Although various embodiments of the invention have been described above with a certain degree of particularity, or with reference to one or more individual embodiments, those skilled in the art could make numerous alterations to the disclosed embodiments without departing from the spirit or scope of this invention. In particular, it should be understand that the described technology may be employed independent of a personal computer. Other embodiments are therefore contemplated. It is intended that all matter contained in the above description and shown in the accompanying drawings shall be interpreted as illustrative only of particular embodiments and not limiting. Changes in detail or structure may be made without departing from the basic elements of the invention as defined in the following claims.

## Claims

1. A system for remotely controlling usage of a plurality of equipment, the system comprising:
a plurality of interlock modules communicatively connected to one or more of the plurality of equipment, each of the plurality of interlock modules being configured to control a status of at least one of the plurality of equipment, wherein each of the interlock modules is assigned an identifier and is addressable by an internal communications network;
a web-based platform including a rule-based engine controlling usage of the plurality of equipment, the web based platform configured to:
receive a user input regarding use of at least one of the plurality of equipment, determine, based on the user input and the status of at least one of the equipment and using a rule based engine, a control signal for one or more of the plurality of equipment, and
communicate the control signal to a bridge located on the internal communications network
wherein the bridge configured to receive an instruction from the web based platform to control the status of the at least one of the equipment, generate and communicate a message to one of the interlock modules, receive a response from the one of the interlock modules regarding the status of the at least one of the equipment, and to communicate the status of the at least one of the plurality of equipment to the web based platform.

2. The system of claim 1, wherein the interlock modules are electrically isolated from the one or more of the plurality of equipment, and optionallly, wherein the interlock modules are electrically isolated from the one or more of the plurality of equipment using at least one of a solenoid and an optical switch.

3. The system of any preceding claim, further comprising a firewall protecting the internal communications network from an Internet based network.

4. The system of any preceding claim, wherein the rule based engine includes a plurality of rules to control usage of one or more of the equipment based on one or more of:
• training level of a user;
• a predetermined schedule for usage of the one or more of the equipment; and
• a length of usage of the one or more of the equipment.

5. The system of any preceding claim, wherein at least one of the interlock modules is further configured to receive an observation result from an equipment and to communicate the observation result to the web based platform via the bridge, and optionally wherein the equipment is an imaging device and the observation result is a sample processed by the imaging device.

6. The system of any preceding claim, wherein at least one of the interlock module is configured to allow simultaneous use of an equipment by more than one users.

7. The system of any preceding claim, further comprising:
a computer kiosk connected to the internal communication network, wherein the computer kiosk is configured to communicate with the rule based engine.

8. The system of any preceding claim, wherein each of the interlock modules is assigned a dedicated IP address.

9. The system of any preceding claim, wherein each of the interlock modules is assigned a virtual IP address.

10. An interlock system, comprising:
an interlock module communicatively connected to an equipment, the interlock module being configured to control a status of the equipment, wherein the interlock module is assigned an identifier and is addressable by an internal communications network;
a web-based platform including a rule-based engine controlling usage of the equipment, the web based platform configured to:
receive a user input regarding use of the equipment,
determine, based on the user input and the status of the equipment and using a rule based engine, a control signal for the equipment, and
communicate the control signal to a bridge located on the internal communications network,
wherein the bridge is configured to receive an instruction from the web based platform to control the status of the equipment, generate and communicate a message to the interlock module, receive a response from the interlock module regarding the status of the equipment, and to communicate the status of the equipment to the web based platform.

11. The interlock system of claim 10, wherein the identifier of the interlock module is at least one of an IP address, a MAC address, and a unique identifier of the interlock module.

12. The interlock system of claim 11, wherein the interlock module has a plurality of channels and the equipment is communicatively connected to the interlock module over one of the channels, and optionally wherein the equipment is communicatively connected to the interlock device via an electrically isolated channel, and further optionally wherein the equipment is communicatively connected to the interlock device via at least one of an optical relay, an optical switch, and a solenoid.

13. The interlock system of any of claims 10 to 12, wherein the interlock module is further configured to monitor usage of the equipment.

14. The interlock system of any of claims 10 to 13, wherein the equipment is an application and the interlock module is configured to control the application.

15. An interlock system, comprising:
an interlock module electrically isolated and communicatively connected via an optical switch to an equipment, the interlock module being configured to control a status of the equipment via the optical switch and to communicate the status of the equipment to a web-based platform, wherein the interlock module is assigned an identifier;
the web-based platform including a rule-based engine controlling usage of the equipment, the web based platform configured to:
receive a user input requesting or scheduling use of the equipment,
determine, based on the user input and the status of the equipment and using the rule based engine, a control signal for the equipment, and
communicate with the interlock module using the identifier to communicate the control signal for the equipment.
